# EUROPÄISCHE PATENTSCHRIFT

(11) **EP 3 669 184 B1**
(45) Veröffentlichungstag und Bekanntmachung des Hinweises auf die Patenterteilung: **06.10.2021**
(21) Anmeldenummer: 18759877.6
(22) Anmeldetag: 13.08.2018
(51) Int. Cl.: G01N 30/14, B01D 19/00

(54) **VORRICHTUNG ZUM AUFBEREITEN EINER FLÜSSIGEN PROBE FÜR EINEN GAS-CHROMATOGRAPHEN**
DEVICE FOR PREPARING A LIQUID SAMPLE FOR A GAS CHROMATOGRAPH
DISPOSITIF DE PRÉPARATION D'UN ÉCHANTILLON LIQUIDE POUR CHROMATOGRAPHE À PHASE GAZEUSE

(30) Priorität: 14.08.2017 DE 102017118531
(43) Veröffentlichungstag der Anmeldung: 24.06.2020
(73) Patentinhaber: Trasis S.A., 4430 Ans (BE)
(72) Erfinder: JANUS, Alexander, 22761 Hamburg (DE); GRUGEL-ENDRESS, Reinhard, 91207 Lauf (DE)
(74) Vertreter: Lerho, Marc J. A.
(86) Internationale Anmeldenummer: PCT/EP2018/071903
(87) Internationale Veröffentlichungsnummer: WO 2019/034596

(56) Entgegenhaltungen:
- EP-A1- 2 927 681
- WO-A1-02/088671
- WO-A1-2009/151557
- GB-A- 2 392 114

## Beschreibung

Die vorliegende Erfindung bezieht sich auf eine Vorrichtung zum Aufbereiten einer flüssigen Probe für einen Gas-Chromatographen, umfassend einen Flüssigkeitsraum mit einer Zuleitung für die flüssige Probe, und einen Gasraum, der einen Auslass aufweist, welcher mit dem Gas-Chromatographen verbindbar ist.

Flüssige Proben, die beispielsweise auf Lösemittelrückstände oder sonstige organische Bestandteile untersucht werden sollen, werden üblicherweise in einem Gas-Chromatographen analysiert. Dabei wird die flüssige Probe direkt in einen Injektor eingespritzt und verdampft dort in kurzer Zeit. Die Probe oder Teile davon werden dann einer Trennsäule für eine gas-chromatographische Trennung zugeführt. Die verschiedenen Bestandteile der Probe werden im Durchfluss getrennt und anschließend zu einem Detektor geleitet, wo sie in auswertbare elektrische Signale umgewandelt werden. Häufig beinhaltet die Probe jedoch Bestandteile, bei denen eine direkte Injektion nicht möglich ist, da sie den Injektor, die Trennsäule oder auch den Detektor stören oder beschädigen können. In diesem Fall entnimmt man eine größere Probenmenge und verdampft diese in einem separaten Gefäß, auch Headspace-Verdampfer genannt. Dabei handelt es sich um ein Glas, welches verschlossen und erhitzt wird, damit der oder die zu analysierenden Bestandteile der Probe, auch Analyt(en) genannt, aus der Flüssigkeit austreten und sich in der Gasphase anreichern können. Dies geschieht im Allgemeinen im Bereich der Siedetemperatur des Analyten oder darüber. Hat sich ein Gleichgewicht in der Gasphase eingestellt, wird daraus eine Probe entnommen und in Gas-Chromatographen injiziert. Die störenden Bestandteile der Probe bleiben in der Regel in der Flüssigkeit, auch Trägerflüssigkeit genannt, zurück. Für die Probenaufbereitung im Headspace-Verdampfer wird typischerweise ein Probenvolumen von 1ml bis 10 ml benötigt, während bei der direkten Injektion in den Gas-Chromatographen ein Probenvolumen von etwa 1 µl bis 10 µl ausreichend ist.

Aus der US 5,492,838 geht es um ein Verfahren und eine Vorrichtung zur kontinuierlichen Fluidextraktion und -analyse mittels Membran. Dazu sind zwei Fluidkammern durch eine semipermeable Struktur getrennt. Durch die eine Kammer fließt das Fluid mit der zu extrahierenden Substanz und durch die andere Kammer das extrahierende Fluid. Dabei kann es sich um ein Gas handeln, das einem Gaschromatographen zugeführt wird. Bevorzugte Membranen sind aus Silikon oder Polypropylen und sind hydrophob. Die Kammern können als benachbarte Quader oder als konzentrische Zylinder ausgebildet sein.

Die US 4,590,098 beschreibt Möglichkeiten, anisotrope Membranen aus Polymeren herzustellen, die mit einem besonders dünnen Silikonfilm beschichtet sind. Mit diesen Kompositmembranen lassen sich verschiedene organische Lösungsmittel und Gase voneinander trennen. Sie können beispielsweise in Vorrichtungen mit einer ersten Fluidkammer einsetzt, um diese von einer kleineren zweiten Fluidkammer zu trennen. Ein Fluidgemisch wird an der Kompositmembran, die von einer porösen, gesinterten Metallplatte gestützt wird, vorbeigeleitet. Dabei kann eines der Fluide aus dem Gemisch durch die Membran dringen und so separiert werden.

Die DE 26 04 003 A1 offenbart eine Vorrichtung zur Abscheidung von Gasen aus Flüssigkeiten. Die Vorrichtung umfasst ein Behälterrohr aus einer länglichen, zylindrischen Hülse mit Zulauf und Ablauf. Die Innenwandung des Rohres ist mit einer Spirale, die als einfaches Gewinde ausgebildet sein kann, versehen. Im Inneren des Behälterrohres ist ein Trennrohr mit Öffnungen nach Art eines Siebes angeordnet. Über diese Öffnungen ist eine hydrophobe Folie gewickelt, durch die in der Flüssigkeit vorhandenes Gas durchtreten und abgesaugt werden kann.

Die GB 2 392 114 A offenbart eine Vorrichtung gemäß dem Oberbegriff des Anspruchs 1.

Es ist eine Aufgabe der vorliegenden Erfindung, eine Vorrichtung zum Aufbereiten einer flüssigen Probe für direkte Injektion der korrespondierenden gasförmigen Probe in einen Micro-Gas-Chromatographen anzugeben, die mit geringeren Probenvolumina arbeiten kann.

Diese Aufgabe wird dadurch gelöst, dass bei einer Vorrichtung zum Aufbereiten einer flüssigen Probe für einen Gas-Chromatographen ein Flüssigkeitsraum und ein Gasraum vorgesehen sind, die durch eine semipermeable Trennschicht voneinander getrennt sind, wobei der Flüssigkeitsraum eine Zuleitung für die flüssige Probe umfasst, und wobei der Gasraum einen Auslass aufweist, welcher mit dem Gas-Chromatographen verbindbar ist, wobei dem Flüssigkeitsraum und/oder dem Gasraum mindestens ein Heizelement zugeordnet ist.

Ein Vorteil der Erfindung besteht darin, dass das Durchtreten von Flüssigkeiten, insbesondere der Trägerflüssigkeit, durch die semipermeable Trennschicht verhindert oder zumindest reduziert wird, während Dämpfe, beispielsweise des Lösemittels, die mittels Heizelement erzeugt werden können, leicht durch die semipermeable Trennschicht durchtreten können. Dadurch wird nur ein geringes Probenvolumen von etwa 10 µl bis 30 µl für die Headspace-Analyse benötigt, so dass auch wertvolle und knappe Proben wie zum Beispiel Radiopharmaka wirtschaftlich analysiert werden können. Mithilfe der Trennschicht kann vermieden werden, dass radioaktive Substanzen, beispielsweise aus einer wässrigen Lösung, in die Gasphase übertreten. Sie gelangen daher nicht in den Gas-Chromatographen, sondern verbleiben in der Flüssigkeit. Somit wird eine Kontamination des Gas-Chromatographen und dessen Umgebung vermieden. Außerdem kann mittels Heizelement der Durchtritt des Analyten durch die semipermeable Trennschicht auch bei niedrigen Umgebungstemperaturen erfolgen, wodurch sich eine Aufwärmphase und das Erreichen eines stabilen Gleichgewichts in der Gasphase verkürzt. Bei wässrigen Lösungen entsteht dadurch auch weniger Wasserdampf, so dass das Risiko, dass Bestandteile des Gas-Chromatographen, wie z. B. Halbleiterstrukturen, durch den Wasserdampf beschädigt werden, minimiert wird. Durch den Auslass am Gasraum kann die aufbereitete Probe direkt an den Gas-Chromatographen weitergegeben werden, so dass keine Verunreinigung der Probe entsteht, die beispielsweise bei herkömmlichen Verfahren bei der Entnahme aus einem separaten Behälter auftreten kann. Das mindestens eine Heizelement ist dem Flüssigkeitsraum und/oder dem Gasraum zugeordnet. Ist das mindestens eine Heizelement dem Flüssigkeitsraum zugeordnet, kann die flüssige Probe erwärmt und dadurch das Verdampfen der Probe beschleunigt werden, so dass sich das stabile Gleichgewicht in der Gasphase noch schneller einstellt. Wird zusätzlich oder alternativ der Gasraum durch mindestens ein daran angeordnetes Heizelement beheizt, kann das darin befindliche Gas, welches als Trägergas zum Transport des gasförmigen Analyten dient, eine größere Menge an Gas aus der flüssigen Probe aufnehmen, so dass eine größere Menge der aufbereiteten Probe an den Gas-Chromatographen weitergeleitet werden kann. Insbesondere kann die Vorrichtung zum Aufbereiten einer flüssigen Probe auch an einen Micro-Gas-Chromatographen angeschlossen werden, während eine Kombination der bisher bekannten Headspace-Verdampfer mit einem Micro-Gas-Chromatographen wegen Größe und dem Energiebedarf der Headspace-Verdampfer nicht vorteilhaft ist.

In bevorzugten Ausführungsformen ist die Trennschicht von mindestens einer Seite selektiv permeabel, so dass sie auf die jeweilige Probe abgestimmt sein kann. Dadurch erfolgt eine besonders effektive Trennung des Analyten von der Trägerflüssigkeit. Die selektive Permeabilität der Trennschicht kann bevorzugt durch Materialwahl oder eine Beschichtung erreicht werden.

Erfindungsgemäß ist die Vorrichtung konfiguriert, um ein Probenvolumen von etwa 10µl bis 30µl aufzunehmen.

Erfindungsgemäß weist die Trennschicht Poren einer Größe zwischen 0,05 µm und 5 µm auf. Auf diese Weise kann der Analyt in der flüssigen Probe besonders effektiv von der Trägerflüssigkeit getrennt werden.

Vorteilhafterweise ist die Trennschicht eine Membran. Derartige Trennschichten sind besonders dünn und trotzdem stabil, wodurch die Gesamtgröße der Vorrichtung minimiert werden kann.

In bevorzugten Ausführungsformen besteht die Membran aus einem der Materialien Polytetrafluorethylen, Polyvinylidenfluorid, Polyester, Polysulfon, Cellulosederivat, Polyamid, Polyacrylat oder Polypropylen. Diese Materialien weisen eine gute Beständigkeit gegen Chemikalien auf, lassen sich gut sterilisieren und sind bevorzugt hydrophob, so dass sie möglichst wenig Wasserdampf passieren lassen.

Vorteilhafterweise ist die Membran gereckt. Eine derartige Membran weist eine besonders hohe mechanische Festigkeit auf. Besonders bevorzugt besteht die Membran aus gerecktem PTFE, wodurch die Membran außerdem gute hydrophobe und chemikalienbeständige Eigenschaften aufweist.

Bevorzugt umfasst die Trennschicht mindestens zwei Lagen, die jeweils auch als Membran ausgebildet sein können. Auf diese Weise lässt sich die mechanische Festigkeit der Trennschicht erhöhen. Die mindestens zwei Lagen können jeweils unterschiedlich ausgeführt sein, beispielsweise in Bezug auf ihre Porengröße oder ihr Material. Auf diese Weise kann die Permeabilität für verschiedene Substanzen beeinflusst werden.

Vorteilhafterweise umfasst die Trennschicht mindestens eine Lage, die hydrophob ist. Dies verhindert oder reduziert den Durchtritt von Wasser, insbesondere wenn es als Trägerflüssigkeit eingesetzt wird, durch die Trennschicht. Dadurch kann vermieden werden, dass Wasser in den Gasraum und von dort in den Gas-Chromatographen gelangt und diesen beschädigt.

Erfindungsgemäß weist die Trennschicht eine Dicke von 10 µm bis 300 µm, besonders bevorzugt von 100 µm bis 150 µm auf. Derartige Trennschichtdicken lassen den Analyten schnell passieren und weisen dennoch eine hinreichende Stabilität für die Herstellung der Vorrichtung und deren Betrieb auf.

Vorteilhafterweise ist der Gasraum größer als der Flüssigkeitsraum. Dadurch lässt sich auch mit geringen Probenmengen und Analyten, die sich besonders gut in der Trägerflüssigkeit lösen, eine hinreichende Konzentration des Analyten im Gasraum erzielen, so dass auch seltene und teure Proben effizient analysiert werden können. Außerdem kann die Gesamtgröße der Vorrichtung dadurch minimiert werden.

Bevorzugt weist die Vorrichtung eine Pumpvorrichtung zum Erzeugen einer Zirkulation im Gasraum auf. Auf diese Weise kann das Volumen des Gases, dass den Analyten enthält, im Gasraum definiert werden. Der Effekt eines Heizelements, nämlich das schnellere Erreichen eines stabilen Gleichgewichts und/oder das Aufnehmen einer größeren Menge an Gas aus der flüssigen Probe, kann durch eine Pumpvorrichtung noch verstärkt werden.

Die vorliegende Erfindung soll unter Bezugnahme auf ein bevorzugtes Ausführungsbeispiel näher erläutert werden. Dazu zeigen
- Figur 1: eine Vorrichtung zum Aufbereiten einer flüssigen Probe für einen Gas-Chromatographen gemäß einem ersten Ausführungsbeispiel;
- Figur 2: eine Vorrichtung zum Aufbereiten einer flüssigen Probe für einen Gas-Chromatographen gemäß einem zweiten Ausführungsbeispiel;
- Figur 3: eine Vorrichtung zum Aufbereiten einer flüssigen Probe für einen Gas-Chromatographen gemäß einem dritten Ausführungsbeispiel;
- Figur 4: eine Vorrichtung zum Aufbereiten einer flüssigen Probe für einen Gas-Chromatographen gemäß einem vierten Ausführungsbeispiel;
- Figur 5: eine Vorrichtung zum Aufbereiten einer flüssigen Probe für einen Gas-Chromatographen gemäß einem fünften Ausführungsbeispiel;
- Figur 5a: einen Aufbau einer Trennschicht aus Figur 5;
- Figur 5b: einen Aufbau einer Trennschicht in einer alternativen Ausführungsform;
- Figur 6: eine Vorrichtung zum Aufbereiten einer flüssigen Probe für einen Gas-Chromatographen gemäß einem sechsten Ausführungsbeispiel;
- Figur 7: eine Vorrichtung zum Aufbereiten einer flüssigen Probe für einen Gas-Chromatographen gemäß einem siebten Ausführungsbeispiel; und
- Figur 8: die Vorrichtung gemäß dem ersten Ausführungsbeispiel in einem System zur Analyse von Proben.

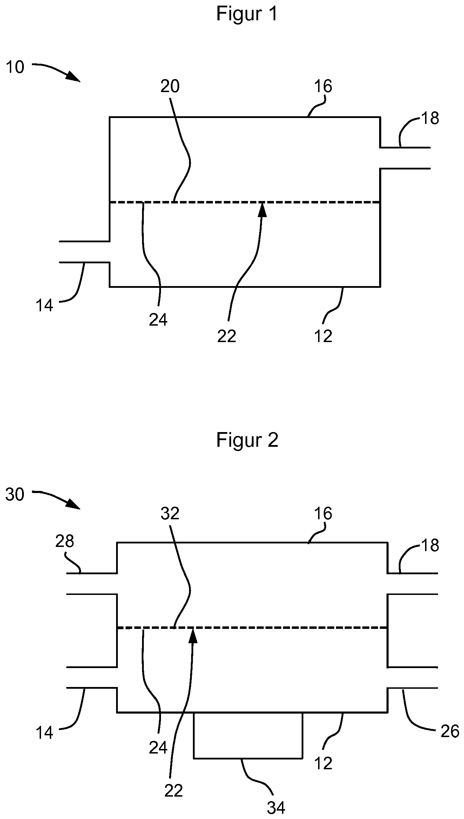

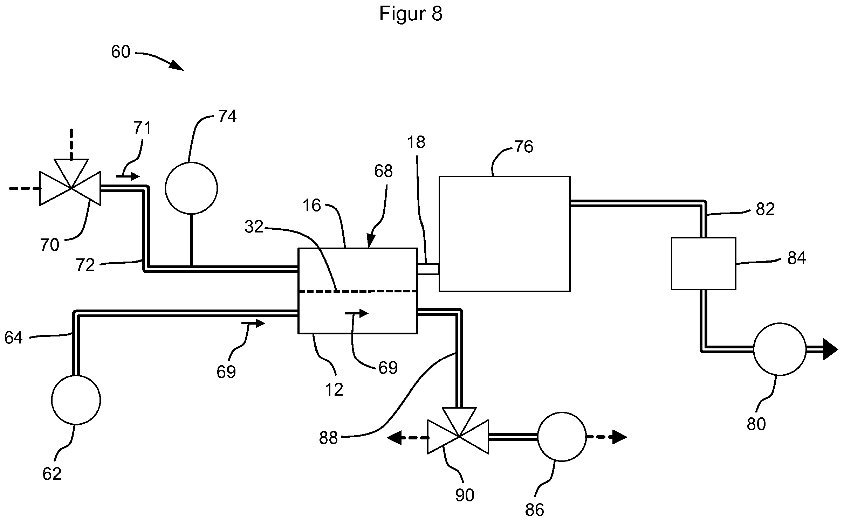

In Figur 1 ist eine Vorrichtung 10 zum Aufbereiten einer flüssigen Probe für einen Gas-Chromatographen gemäß einem ersten Ausführungsbeispiel dargestellt. Die Vorrichtung 10 umfasst einen Flüssigkeitsraum 12 mit einer Zuleitung 14 für die flüssige Probe und einen Gasraum 16 mit einem Auslass 18. Der Auslass 18 ist mit einem Gas-Chromatographen (siehe Figur 8) verbindbar, so dass die aufbereitete Probe dem Gas-Chromatographen direkt zugeführt werden kann. Zwischen dem Flüssigkeitsraum 12 und dem Gasraum 16 ist eine semipermeable Trennschicht 20 angeordnet. Die Trennschicht 20 trennt die Probe in eine flüssige Phase und eine Gasphase. Dabei tritt aus der in den Flüssigkeitsraum 12 eingebrachten Probe Gas eines zu analysierenden Bestandteils der Probe, gegebenenfalls zusammen mit Lösemittel, durch die Trennschicht 20 in den Gasraum 16, bis sich ein stabiles Gleichgewicht einstellt und Sättigung eintritt. Der Durchtritt von Flüssigkeiten, insbesondere eine Trägerflüssigkeit, in der der zu analysierende Bestandteil der Probe, auch Analyt genannt, transportiert wird, wird durch die Trennschicht 20 verhindert. Am Gasraum 16 und/oder am Flüssigkeitsraum 12 ist ein Heizelement angebracht (nicht dargestellt).

Beispiele für Analyten sind Lösemittelreste von Ethanol, Acetonitril, Aceton, Methanol und 2-Propanol. Die Trägerflüssigkeit besteht im Allgemeinen aus Wasser, Wasser mit Kochsalz oder Wasser mit Kochsalz und Zusätzen wie pH-Puffern, z. B. Phosphatpuffer oder Acetatpuffer, oder Stabilisatoren, z. B. Ascorbinsäure. Es wird durch den hier vorgeschlagenen Verdampfer verhindert, dass die Trägerflüssigkeit und gegebenenfalls ihre Zusätze in den Gas-Chromatographen gelangen, da sie diesen beschädigen können. Insbesondere durch Zusätze wie Kochsalz zu Wasser als Trägerflüssigkeit kann erreicht werden, dass sich insbesondere in polaren Lösemitteln die Analyten leichter von der Trägerflüssigkeit trennen lassen. Die vorliegende Erfindung eignet sich insbesondere für die Analyse mittels Radiopharmaka, die z.B. in wässrigen Lösungen vorliegen können. Durch die Trennschicht wird vermieden, dass die radioaktiven Substanzen in diesen Lösungen in den Gasraum und von dort in den Gas-Chromatographen gelangen. Auf diese Weise wird eine Kontamination des Gas-Chromatographen und dessen Umgeben vermieden.

Als Material für eine Trennschicht eignet sich zum Beispiel Kunststoff oder Keramik. Bei einer Ausführung als Kunststoffmembran werden als Material Polytetrafluorethylen (PTFE), Polyvinylidenfluorid (PVDF), Polyester, Polysulfon, Cellulosederivat, Polyamid, Polyacrylat oder Polypropylen bevorzugt. Bei allen im folgenden besprochenen Ausführungsformen hatten sich insbesondere auch Trennschichten bewährt, die eine Membran aus gereckter PTFE-Folie aufweisen oder aus einer solchen bestehen. Bevorzugt ist die Trennschicht von mindestens einer Seite 22 selektiv permeabel. Dies kann durch Wahl eines entsprechenden Kunststoffs erreicht werden. Die Trennschicht ist insbesondere dazu geeignet, den Durchtritt von radioaktive Substanzen in den Gasraum zu verhindern. Die Trennschicht ist bevorzugt zumindest auf der zum Flüssigkeitsraum 12 gewandten Seite 22 hydrophob, wodurch noch besser verhindert werden kann, dass Flüssigkeiten aus der Probe durch die Trennschicht 20 in den Gasraum 16 und von dort in den Gas-Chromatographen gelangen. Die Trennschicht weist in den hier beschriebenen Ausführungsformen Poren 24 auf, die bevorzugt einen Durchmesser zwischen ca. 0,05 µm und ca. 5 µm haben können. Die Dicke der Trennschicht liegt bei den in den Figuren 1 bis 6 dargestellten Ausführungsbeispielen bevorzugt zwischen ca. 10 µm und ca. 300 µm, eine gute mechanische Festigkeit aufzuweisen. Sowohl bei der Porengröße als auch bei der Membrandicke kann es zu herstellungsbedingten Schwankungen kommen.

Die in Figur 1 gezeigte Trennschicht 20 ist beispielsweise eine Membran aus Polytetrafluorethylen, das gute hydrophobe Eigenschaften hat. Alternativ kann die Membran im vorliegenden Beispiel aus Polyvinylidenfluorid sein. Im in Figur 1 gezeigten Beispiel liegt die Größe der Poren 24 ungefähr um 0,2 µm und die Dicke der Menbran liegt bei ca. 120 µm. In Abwandlungen beträgt die Porengröße aber beispielsweise auch etwa 0,5 µm und kann die Dicke im Bereich von 150 µm liegen.

Die in Figur 1 gezeigte Vorrichtung 10 weist ein Gehäuse auf, das den Flüssigkeitsraum 12 und den Gasraum 16 umfasst und das aus Aluminium besteht. Ein Gehäuse aus Aluminium bietet eine besonders gute Wärmeleitung und ist weitestgehend inert gegenüber wässrigen Proben. Auch die in den weiteren Ausführungsbeispielen mit Bezug auf die Figuren 2 bis 6 beschriebenen Vorrichtungen haben bevorzugt ein Gehäuse aus Aluminium. Als Alternative zu Aluminium kann für das Gehäuse zum Beispiel auch Edelstahl oder Stahl, Messing, Kupfer, Bronze mit einer Oberflächenbeschichtung aus Nickel, Zinn, Zink, Rhodium, Chrom, Platin, Gold eingesetzt werden.

Das Verdampfen der flüssigen Probe kann in mehr oder weniger großem Umfang bereits bei Raumtemperatur erfolgen, das heißt bei ca. 20°C oder leicht darüber. In alternativen Ausführungsformen wird die flüssige Probe auch leicht erwärmt, um das Anreichern des oder der Analyten im Gasraum 16 zu beschleunigen, wie es im Folgenden mit Bezug auf Figur 2 beschrieben wird.

Figur 2 zeigt eine Vorrichtung 30 zum Aufbereiten einer flüssigen Probe für einen Gas-Chromatographen gemäß einem zweiten Ausführungsbeispiel. Die Vorrichtung 30 unterscheidet sich von der Vorrichtung 10 aus Figur 1 dadurch, dass die Trennschicht 32 im zweiten Ausführungsbeispiel eine Membran aus Polypropylen ist. Alternativ kann die Membran beispielsweise auch aus einem Polyester, wie unter anderem einem Polycarbonat sein. Die Größe der Poren 24 liegt im hier beschriebenen Beispiel bei etwa 0,05 µm, und die Dicke der Membran 32 beträgt ungefähr 30 µm. In Abwandlungen kann die Porengröße der Membran aus Polyester auch ca. 0,1 µm betragen, und die Dicke kann bei 40 µm liegen.

Die Vorrichtung 30 weist des Weiteren noch einen Überlauf 26 auf, über den Probenflüssigkeit aus dem Flüssigkeitsraum ablaufen kann oder über den der Flüssigkeitsraum 12 entlüftet werden kann. Am Gasraum 16 ist ein Einlass 28 für ein bevorzugt gefiltertes Trägergas angeordnet, mit dem die gasförmige Probe zum Gas-Chromatographen transportiert werden kann.

Außerdem ist dem Flüssigkeitsraum 12 der Vorrichtung 30 im in Figur 2 dargestellten Ausführungsbeispiel ein Heizelement 34 zugeordnet. Mit dem Heizelement 34 wird die flüssige Probe im Flüssigkeitsraum 12 erwärmt, so dass das Verdampfen und durch die Trennschicht 32 treten des Analyten beschleunigt wird und ein stabiles Gleichgewicht in der Gasphase innerhalb einer kürzeren Zeit erreicht wird. Dafür wird die flüssige Probe mittels des Heizelements 34 auf etwa 40°C bis 45°C erwärmt. Alternativ kann die flüssige Probe auch auf höhere Temperaturen erwärmt werden, wie zum Beispiel auf Temperaturen zwischen 60°C und 100°C, was beispielsweise notwendig sein kann, wenn schwer zu verdampfende Lösemittel wie Dimethylsulfoxid (DMSO) und Dimethylformamid (DMF) nachgewiesen werden sollen. Die maximale Temperatur, auf die die flüssige Probe erhitzt werden kann, richtet sich im Allgemeinen nach der maximal zulässigen Temperatur für das Material der Trennschicht 32 und der Anschlüsse für die Flüssigkeiten und die Gase.

In alternativen Ausführungsformen kann ein zusätzliches Heizelement am Gasraum angeordnet sein. Dadurch kann beispielsweise das Trägergas für die aufbereitete Probe erwärmt werden. Auf diese Weise kann das Trägergas eine größere Menge der durch die Trennschicht tretenden gasförmigen Probe aufnehmen und an den Gas-Chromatographen weiterleiten, so dass dort eine größere Probenmenge zur Analyse zur Verfügung steht. Bei kleinen, kompakten Vorrichtungen kann das Heizelement nur am Gasraum angeordnet werden, da dann durch die Wärmeleitung der Vorrichtung der Flüssigkeitsraum ebenfalls erwärmt wird.

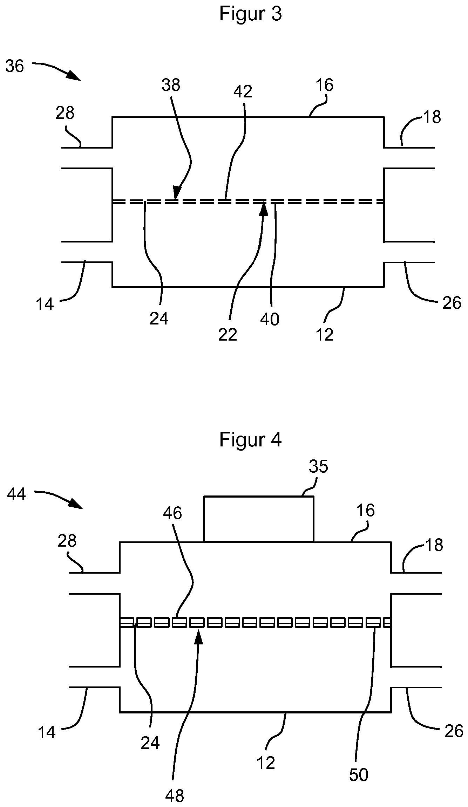

In Figur 3 ist eine Vorrichtung 36 gemäß einem dritten Ausführungsbeispiel der vorliegenden Erfindung dargestellt. Die Vorrichtung 36 umfasst eine Trennschicht 38 zwischen dem Flüssigkeitsraum 12 und dem Gasraum 16, die zwei Lagen 40, 42 umfasst. Am Gasraum 16 und/oder am Flüssigkeitsraum 12 ist ein Heizelement angebracht (nicht dargestellt). Die zweilagige Trennschicht 38 besteht aus zwei Lagen 40, 42 aus Cellulosederivaten, beispielsweise Celluloseacetat und/oder Cellulosenitrat und/oder einem Mischpolymer aus Celluloseacetat und Cellulosenitrat, und weist eine höhere Druckfestigkeit auf als eine einlagige Trennschicht der gleichen Dicke. Die Trennschicht 38 kann als zweilagige Membran oder aus zwei Membranen gebildet werden, wobei kann die Membran oder mindestens eine der zwei Membranen zusätzlich gereckt sein. Die Größe der Poren 24 liegt bei der ersten Lage 40 im Bereich von 1,2 µm und bei der zweiten Lage 42 bei etwa 1,0 µm. Auf diese Weise wird die Permeabilität der Trennschicht 38 beeinflusst, da manche Stoffe, die aus der Trägerflüssigkeit austreten, zwar die erste Lage 40 passieren können, aber die zweite Lage 42 aufgrund der kleineren Porengröße nicht. Die Dicke der Lagen liegt hier bei ca. 50 µm. In Abwandlungen kann sie etwa auch bei ca. 60 µm liegen. Die beiden Lagen können die gleiche oder unterschiedliche Dicken aufweisen. In alternativen Ausführungsformen können die Lagen 40, 42 der Trennschicht 38 auch aus gleichem Material oder Material unterschiedlicher Polymerklassen sein. Auch andere Materialien wie PTFE, PVDF, PA, Polysulfon, Polyacrylat oder Polypropylen kommen für die eine oder mehrere Lagen der Trennschicht in Frage. Beispielsweise kann die erste Lage 40 eine Membran aus gerecktem PTFE mit einer Porengröße von 0,5 µm sein. Die zweite Lage 42 kann eine Schicht aus Polypropylen sein, mit der die PTFE-Membran laminiert ist. Die Dicke der zweilagigen Trennschicht kann bei etwa 120 µm liegen. Die Trennschicht kann alternativ auch aus mehr als zwei Lagen, z.B. drei, vier oder fünf Lagen, bestehen. Diese können jeweils aus dem gleichen Material oder auch aus verschiedenen Materialien sein. Bevorzugt ist in alternativen Ausführungsformen mindestens eine Lage 40, 42 der Trennschicht hydrophob, besonders bevorzugt die näher zum Flüssigkeitsraum gewandte Lage 40, damit bei wässriger Trägerflüssigkeit möglichst wenig Wasserdampf in den Gasraum gelangt.

Figur 4 zeigt eine Vorrichtung 44 nach einem vierten Ausführungsbeispiel der vorliegenden Erfindung. Die zwischen dem Flüssigkeitsraum 12 und dem Gasraum 16 angeordnete Trennschicht 46 ist eine Membran aus einem Polyamid, beispielsweise einem Nylon. In Varianten kann die Membran etwa auch aus einem Polysulfon, beispielsweise einem Polyethersulfon, sein. Die Oberfläche der zum Flüssigkeitsraum 12 hin gewandte Seite 48 der Trennschicht 46 weist eine Beschichtung 50 auf, die bewirkt, dass die Trennschicht 46 von dieser Seite 48 selektiv permeabel ist. Dies dient dazu, dass nur bestimmte Stoffe durch die Poren 24 der Trennschicht 46 in den Gasraum 16 treten können. Auf diese Weise kann die Vorrichtung 44 zum Aufbereiten von flüssigen Proben verwendet werden, die mehrere verdampfende Stoffe enthalten, so dass gezielt ein bestimmter Stoff aus der flüssigen Probe herausgefiltert werden kann. Die selektive Beschichtung 50 kann beispielsweise aus Silikon, Polyurethan, Silikagel, Aluminumoxid, einem Molekularsieb (Zeolith), Sol-Gel oder Aktivkohle sein. Die selektive Beschichtung 50 kann zum Beispiel hydrophober als das Membranmaterial sein. In alternativen Ausführungsformen kann die selektive Beschichtung auch hydrophil sein. Eine derartige Beschichtung kann Restmengen an Wasser aufnehmen, welches ungewollt, beispielsweise durch Materialfehler in der hydrophoben Membran, durch die Membran hindurchgetreten ist. Im Anschluss an die Analyse der aufbereiteten Probe im Gas-Chromatographen kann das Wasser aus der Beschichtung der Membran beispielsweise durch Aufheizen wieder entfernt und abgeführt werden. Die Vorrichtung 44 aus Figur 4 umfasst ein am Gasraum 16 angeordnetes Heizelement 35. Aufgrund der kompakten Ausführung lässt sich mit dem hier gezeigten Heizelement 35 nicht nur der Gasraum 16 beheizen, sondern die Wärme überträgt sich auf den Flüssigkeitsraum 12, so dass auch die flüssige Probe beispielsweise auf ca. 40°C bis 45°C erwärmt wird und damit der Übergang des Analyten in die Gasphase beschleunigt wird.

Die Poren 24 der die Trennschicht 46 bildenden beschichteten Membran weisen in diesem Beispiel einen Durchmesser im Bereich von etwa 1,5 µm auf. In Abwandlungen können sie auch eine Größe von ca. 2 µm aufweisen. Die Dicke der Membran ohne Beschichtung beträgt hier je nach Ausführung etwa 90 µm oder etwa 100 µm, wobei die selektive Beschichtung 50 in bevorzugten Ausführungsformen dünner als die unbeschichtete Membran ist. Die Dicke der beschichteten Membran liegt in diesen bevorzugten Ausführungsformen unter 100 µm.

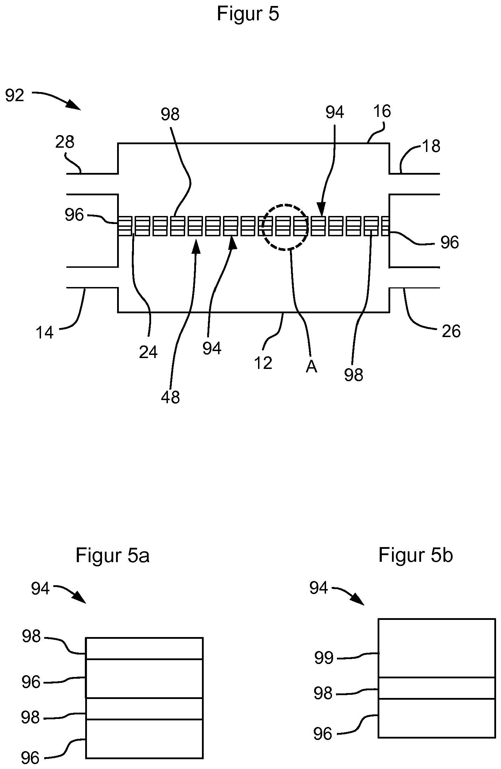

Figur 5 zeigt eine Vorrichtung 92 gemäß einem fünften Ausführungsbeispiel. Darin ist zwischen dem Flüssigkeitsraum 12 und dem Gasraum 16 eine Trennschicht 94 aus zwei Membranen 96 aus gerecktem, hydrophobem PTFE auf, die jeweils auf einer Seite mit einer Schicht 98 aus Polypropylen laminiert sind. Am Gasraum 16 und/oder am Flüssigkeitsraum 12 ist ein Heizelement angebracht (nicht dargestellt). Der Aufbau der Trennschicht 94 gemäß einem Ausschnitt A ist in Figur 5a vereinfacht ohne Poren dargestellt. Die einzelnen Membranen 96 sind dadurch steifer und lassen sich bei der Herstellung besser handhaben. Die Porengröße der Membran 96 liegt in diesem Beispiel bei jeweils 0,5 µm und die Dicke der beschichteten Membran 96 liegt jeweils bei ca. 120 µm. Durch den vierlagigen Aufbau verbessern sich die Rückhalteeigenschaften für im Gasraum 16 unerwünschte Bestandteile aus der Probe, z.B. wässrige Aerosole. In alternativen Ausführungsbeispielen kann statt einer der Membranen 96 oder zusätzlich zu den beiden Membranen 96 eine hydrophile Membran, beispielsweise aus Celluloseacetat, Cellulosemischester, beschichtetem Celluloseacetat oder Polycarbonat, zwischen Flüssigkeitsraum 12 und Gasraum 16 angeordnet sein. Ein Aufbau einer Trennschicht 94 mit einer Membran 96 aus PTFE, einer Beschichtung 98 aus Polypropylen und einer hydrophilen Membran 99, die auch eine Stützstruktur bilden kann, ist vereinfacht in Figur 5b dargestellt. Eine derartige Membran 99 kann z.B. auf der Schicht 98 aus Polypropylen aufliegen und zum Gasraum 16 gerichtet sein. Die hydrophile Membran 99 kann auch als Film aufgebracht oder als Gitter ausgeführt sein. In weiteren Abwandlungen können auch Lagen aus Glasfaser, beispielsweise mit Dicken im Bereich von 0,1 mm bis 0,6 mm, und Quarzfaser, mit einer Dicke bis zu 1 mm, alternativ oder zusätzlich zu einer der bzw. den Membranen 96 und/oder einer hydrophilen Membran 99 zwischen Flüssigkeitsraum 12 und Gasraum 16 angeordnet werden und eine Stützstruktur für die Trennschicht 94 bilden. Weitere alternative Ausführungsformen können auch mehr als eine hydrophile Membran 99 aufweisen. Insgesamt kann die Trennschicht statt vier beispielsweise auch fünf, sechs, sieben, acht, neun, zehn oder mehr Lagen umfassen.

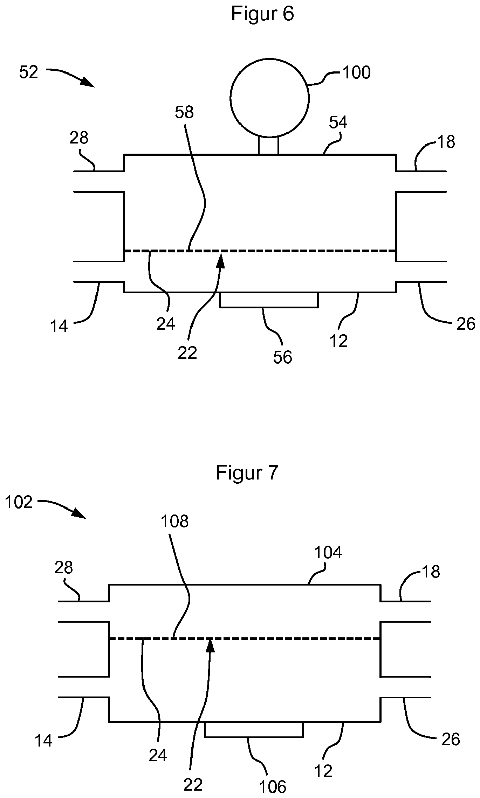

In Figur 6 ist eine Vorrichtung 52 gemäß einem sechsten Ausführungsbeispiel der vorliegenden Erfindung gezeigt. Bei der hier gezeigten Vorrichtung 52 ist der Gasraum 54 größer als der Flüssigkeitsraum 12. Dies ist besonders vorteilhaft für Analyten, die sich besonders gut in der Trägerflüssigkeit lösen und daher ungern in den Gasraum 54 aufsteigen. Durch den größeren Gasraum 54 wird erreicht, dass darin zur Herstellung eines stabilen Gleichgewichts im Vergleich zu einem Gasraum mit gleicher Größe wie der Flüssigkeitsraum 12 bei gleicher Ausgangskonzentration des Analyten in der flüssigen Probe eine höhere Konzentration des Analyten entsteht. Beispielsweise kann das Volumen des Flüssigkeitsraumes 12 etwa 10 µl und das Volumen des Gasraumes 54 etwa 10 ml oder mehr betragen. Im hier gezeigten Beispiel ist ein Heizelement 56 am Flüssigkeitsraum 12 angeordnet, das die flüssige Probe auf ca. 40°C erwärmt und dadurch den Übergang des Analyten in den Gasraum 54 beschleunigt. Außerdem weist die Vorrichtung 52 eine Pumpvorrichtung 100 zum Erzeugen einer Zirkulation im Gasraum 54 auf. Auf diese Weise kann das Volumen des Gases, das den Analyten enthält, im Gasraum 54 definiert werden. Die Homogenität des Gases wird verbessert, und ein Druckabfall oder eine Verdünnung des Gases bei der Weiterleitung in den Gas-Chromatographen werden vermindert. Die Pumpvorrichtung 100 kann z.B. eine Saugpumpe sein. Diese Pumpvorrichtung 100 kann in Varianten ebenfalls beheizt werden, beispielsweise auf eine Temperatur größer als 45°C, und so das zirkulierende Gas erhitzen, um die Aufnahme des Analyten im Gasraum zu beschleunigen.

Die Trennschicht 58 zwischen Flüssigkeitsraum 12 und Gasraum 54 kann wie eine der Trennschichten aus den zuvor beschriebenen Figuren ausgeführt sein. Beispielsweise kann als Trennschicht 58 eine Membran aus PTFE oder aus einem Polyacrylat, beispielsweise einem Acrylcopolymer, mit einer Dicke von ca. 170 µm oder ca. 180 µm und einer Porengröße von ungefähr 3 µm bzw. ca. 5 µm eingesetzt werden.

In Figur 7 ist eine Vorrichtung 102 gemäß einem siebten Ausführungsbeispiel der vorliegenden Erfindung gezeigt. Bei der hier gezeigten Vorrichtung 102 ist der Gasraum 104 kleiner als der Flüssigkeitsraum 12. Die Konzentration des Analyten in der flüssigen Probe ändert sich insbesondere bei Analyten, die sich schlecht in der Trägerflüssigkeit lösen, z.B. unpolare Lösemittel bei Wasser als Trägerflüssigkeit, und daher leicht in den Gasraum 104 aufsteigen, bei einem kleinen Gasraum 104 und einem verhältnismäßig großen Flüssigkeitsraum 12 nur geringfügig. Daher kann man von einer annähernd gleichbleibenden Konzentration ausgehen. Dies ist insbesondere von Vorteil, wenn an der Probenflüssigkeit noch weitere Untersuchungen durchgeführt werden sollen. Es stellt sich auch bei niedrigen Temperaturen sehr schnell ein stabiles Gleichgewicht in der Gasphase ein, so dass ein Heizelement für den Flüssigkeitsraum nicht notwendig ist. Im hier gezeigten Beispiel ist dennoch ein Heizelement 106 am Flüssigkeitsraum 12 angeordnet, welches beispielsweise für erst bei höheren Temperaturen verdampfende Analyten zum Einsatz kommen kann. Die Trennschicht 108 zwischen Flüssigkeitsraum 12 und Gasraum 104 kann wie eine der Trennschichten aus den zuvor beschriebenen Figuren ausgeführt sein. Beispielsweise kann als Trennschicht 108 eine Membran aus PTFE oder aus einem Polyacrylat, beispielsweise einem Acrylcopolymer, mit einer Dicke von ca. 70 µm oder ca. 80 µm und einer Porengröße von ungefähr 3 µm bzw. ca. 5 µm eingesetzt werden.

In Figur 8 ist ein System 60 zur Analyse von Proben dargestellt. Eine flüssige Probe wird dabei aus einem Gefäß 62 durch eine Leitung 64 zum Aufbereiten der flüssigen Probe für einen Gas-Chromatographen in einer hier vorgeschlagenen Vorrichtung 68 transportiert. Der Pfeil 69 gibt die Transportrichtung der flüssigen Probe an.

Die Vorrichtung 68 zum Aufbereiten der flüssigen Probe entspricht im hier dargestellten Beispiel (nicht beansprucht) der mit Bezug auf Figur 2 näher beschriebenen Vorrichtung 30 ohne Heizelement. Sie umfasst einen Flüssigkeitsraum 12 und einen Gasraum 16, sowie eine Trennschicht 32 zwischen dem Flüssigkeitsraum 12 und dem Gasraum 16. In alternativen Systemen 60 kann auch eine der in den Figuren 3 bis 5 gezeigten Vorrichtungen zum Aufbereiten der flüssigen Probe zum Einsatz kommen.

Der Gasraum 16 erhält ein Trägergas aus einem Ventil 70, welche über eine Druckluftleitung 72 transportiert wird. Als Trägergas kann sowohl Luft als auch Helium, Stickstoff, Argon oder ein anderes inertes Gas oder Gasgemisch verwendet werden. Der Pfeil 71 gibt die Strömungsrichtung des Trägergases an. Der Druck des Trägergases wird mit einem Drucksensor 74 überwacht und das Trägergas gelangt über einen nicht dargestellten Filter in den Gasraum 16 der Vorrichtung 68. Ein in der flüssigen Probe enthaltener Analyt verdampft mit Hilfe eines nicht dargestellten Heizelements im Flüssigkeitsraum 12 der Vorrichtung 68 und tritt durch die Poren 24 der Trennschicht 32 in den Gasraum 16. Wenn ein stabiles Gleichgewicht in der Gasphase erreicht ist, wird die gasförmige Probe über einen Auslass 18 direkt in einen Gas-Chromatographen 76 zur Analyse injiziert. Das Verfahren zum Aufbereiten der flüssigen Probe wird als Stop-Flow-Verfahren bezeichnet.

Die Vorrichtung 68 sowie die in den Figuren 1 bis 5 gezeigten Vorrichtungen 10, 30, 36, 44, 52 zum Aufbereiten einer flüssigen Probe können alternativ zu dem Stop-Flow-Verfahren auch im kontinuierlichen Betrieb im Gleichstrom oder Gegenstrom betrieben werden. Im Unterschied zum Stop-Flow-Verfahren wird die flüssige Probe dabei als kontinuierlicher Strom durch die Vorrichtung geleitet, wobei der verdampfte Analyt durch die Trennschicht 32 in den Gasraum 16 tritt. Aus dem Gasraum 16 kann dann eine geeignete Menge, beispielsweise 1 µl, der aufbereiteten Probe, z.B. in regelmäßigen Intervallen oder zu einem beliebigen Zeitpunkt, mittels eines Stroms an gefiltertem Trägergas an den Gas-Chromatographen weitergeleitet wird.

Bei dem Gas-Chromatographen 76 handelt es sich um einen Micro-Gas-Chromatographen, welcher sich durch seine geringere Größe von einem klassischen Gas-Chromatographen unterscheidet. Bisher wurden Micro-Gas-Chromatographen nur für gasförmige Proben verwendet. Aufgrund der geringen Größe der hier vorgeschlagenen Vorrichtung zum Aufbereiten einer flüssigen Probe und der geringen Menge an benötigter Probe von nur 10 µl bis 30 µl im Vergleich zu einem klassischen Headspace-Verdampfer, der mit Volumina von 1 ml bis 10 ml arbeitet, lassen sich flüssige Proben besonders schnell und wirtschaftlich für einen Micro-Gas-Chromatographen aufbereiten und analysieren. Daher ist die hier vorgeschlagene Vorrichtung gut geeignet für wertvolle und knappe Proben, wie etwa Radiopharmaka.

In alternativen Ausführungsformen kann die aufbereitete Probe auch in einen klassischen Gas-Chromatographen injiziert werden.

Mit einer Pumpe 80 können überschüssiges Probenmaterial und Trägergas über eine Leitung 82 und ein Ventil 84 wieder aus dem Gas-Chromatographen 76 entfernt werden. Die in dem Flüssigkeitsraum 12 verbliebene Trägerflüssigkeit kann mittels einer Vakuumpumpe 86 über eine Leitung 88 und ein Ventil 90 aus dem Flüssigkeitsraum 12 abgelassen werden. Alternativ kann die Probe durch Vakuum in der Leitung 64 oder die Pumpe 86 in das Gefäß 62 zurückgeführt werden. Danach steht die Vorrichtung 68 zum Aufbereiten einer weiteren flüssigen Probe zur Verfügung.

Auch weitere, hier nicht dargestellte, alternative Ausführungsformen für eine Vorrichtungen zum Aufbereiten einer flüssigen Probe für einen Gas-Chromatographen entsprechen der vorliegenden Erfindung. Bei diesen kann die Trennschicht beispielsweise andere Permeabilitätseigenschaften, als zuvor beschrieben, aufweisen. Bevorzugt ist die Trennschicht selektiv permeabel. Auch kann die Porengröße der Trennschicht von den oben genannten Größen abweichen. Die Größe der Poren liegt erfindungsgemäß zwischen 0,05 µm und 5 µm und kann sich beispielsweise auch nach dem verwendeten Material für die Trennschicht richten, wobei auch andere als die in den obigen Beispielen genannten Materialien für die Trennschicht in Frage kommen. So können beispielsweise eine, zwei oder mehr gereckte Membranen als Trennschicht verwendet werden. Zusätzlich oder alternativ kann die Trennschicht auch eine, zwei, drei, vier oder mehr hydrophobe Lagen aufweisen. Einzelne oder alle verwendeten Membranen können z.B. aus einem der Materialien Polytetrafluorethylen, Polyvinylidenfluorid, Polyester, Polysulfon, Cellulosederivat, Polyamid, Polyacrylat oder Polypropylen bestehen und beschichtet oder unbeschichtet sein.

### Bezugszeichenliste

- 10: Vorrichtung
- 12: Flüssigkeitsraum
- 14: Zuleitung
- 16: Gasraum
- 18: Auslass
- 20: Trennschicht
- 22: Seite
- 24: Pore
- 26: Überlauf
- 28: Einlass
- 30: Vorrichtung
- 32: Trennschicht
- 34: Heizelement
- 35: Heizelement
- 36: Vorrichtung
- 38: Trennschicht
- 40: Lage
- 42: Lage
- 44: Vorrichtung
- 46: Trennschicht
- 48: Seite
- 50: selektive Beschichtung
- 52: Vorrichtung
- 54: Gasraum
- 56: Heizelement
- 58: Trennschicht
- 60: System
- 62: Gefäß
- 64: Leitung
- 68: Vorrichtung
- 69: Pfeil Transportrichtung
- 70: Ventil
- 71: Pfeil Strömungsrichtung
- 72: Druckluftleitung
- 74: Drucksensor
- 76: Gas-Chromatograph
- 80: Pumpe
- 82: Leitung
- 84: Ventil
- 86: Vakuumpumpe
- 88: Leitung
- 90: Ventil
- 92: Vorrichtung
- 94: Trennschicht
- 96: Membran
- 98: Schicht
- 99: Membran
- 100: Pumpvorrichtung
- 102: Vorrichtung
- 104: Gasraum
- 106: Heizelement
- 108: Trennschicht
- A: Ausschnitt

## Patentansprüche

1. Vorrichtung zum Aufbereiten einer flüssigen Probe für direkte Injektion der korrespondierenden gasförmigen Probe in einen Micro-Gas-Chromatographen, mit einem Flüssigkeitsraum (12) und einem Gasraum (16, 54, 104), die durch eine semipermeable Trennschicht (20, 32, 38, 46, 58, 94, 108) voneinander getrennt sind, wobei der Flüssigkeitsraum (12) eine Zuleitung (14) für die flüssige Probe umfasst, und wobei der Gasraum (16, 54, 104) einen Auslass (18) aufweist, welcher mit dem Gas-Chromatographen (76) verbindbar ist, wobei dem Flüssigkeitsraum (12) und/oder dem Gasraum (16, 54, 104) mindestens ein Heizelement (34, 35, 56, 106) zugeordnet ist, **dadurch gekennzeichnet dass** die Vorrichtung konfiguriert ist, um ein Probenvolumen von etwa 10µl bis 30µl aufzunehmen, und dass die Trennschicht (20, 32, 38, 46, 58, 94, 108) eine Dicke von 10 µm bis 300 µm und Poren (24) einer Größe zwischen 0,05 µm und 5 µm aufweist.

2. Vorrichtung nach Anspruch 1, **dadurch gekennzeichnet, dass** die Trennschicht (20, 32, 38, 46, 58, 94, 108) von mindestens einer Seite (22, 48) selektiv permeabel ist.

3. Vorrichtung nach einem der Ansprüche 1 bis 2, **dadurch gekennzeichnet, dass** die Trennschicht (20, 32, 38, 46, 58, 94, 108) eine Membran ist.

4. Vorrichtung nach Anspruch 3, **dadurch gekennzeichnet, dass** die Membran aus einem der Materialien Polytetrafluorethylen, Polyvinylidenfluorid, Polyester, Polysulfon, Cellulosederivat, Polyamid, Polyacrylat oder Polypropylen besteht.

5. Vorrichtung nach Anspruch 3 oder 4, **dadurch gekennzeichnet, dass** die Membran gereckt ist.

6. Vorrichtung nach einem der Ansprüche 1 bis 5, **dadurch gekennzeichnet, dass** die Trennschicht (20, 32, 38, 46, 58, 94, 108) mindestens zwei Lagen (40, 42) umfasst.

7. Vorrichtung nach einem der Ansprüche 1 bis 6, **dadurch gekennzeichnet, dass** die Trennschicht (20, 32, 38, 46, 58, 94, 108) mindestens eine Lage (40) umfasst, die hydrophob ist.

8. Vorrichtung nach einem der Ansprüche 1 bis 7, **dadurch gekennzeichnet, dass** der Gasraum (54) größer als der Flüssigkeitsraum (12) ist.

9. Vorrichtung nach einem der Ansprüche 1 bis 8, **gekennzeichnet durch** eine Pumpvorrichtung (100) zum Erzeugen einer Zirkulation im Gasraum (54).

## Claims

1. Device for preparing a liquid sample for a direct injection of the corresponding gaseous sample to a micro-gas chromatograph having a fluid space (12) and a gas space (16, 54, 104), which spaces are separated by a semipermeable separating layer (20, 32, 38, 46, 58, 94, 108), the fluid space (12) comprising a supply line (14) for the liquid sample, and the gas space (16, 54, 104) having an outlet (18) that can be connected with the gas chromatograph (76), wherein the fluid space (12) and/or the gas space (16, 54, 104) is associated with at least one heating element (34, 35, 56, 106), **characterised in that** the device is configured to absorb a sample volume of approximately 10 µl to 30 µl, and **in that** the separating layer (20, 32, 38, 46, 58, 94, 108) has a thickness of 10 µl to 300 µl and pores (24) having a size between 0,05 µl and 5 µl.

2. Device according to claim 1, **characterised in that** the separating layer (20, 32, 38, 46, 58, 94, 108) is selectively permeable from at least one side (22, 48).

3. Device according to any of claims 1 - 2, **characterised in that** the separating layer (20, 32, 38, 46, 58, 94, 108) is a membrane.

4. Device according to claim 3, **characterised in that** the membrane consists of one of the following materials: polytetrafluoroethylene, polyvinylidene fluoride, polyester, polysulphone, cellulose derivative, polyamide, polyacrylate, or polypropylene.

5. Device according to claim 3 or 4, **characterised in that** the membrane is elongated.

6. Device according to any of claims 1 - 5, **characterised in that** the separating layer (20, 32, 38, 46, 58, 94, 108) comprises at least two layers (40, 42).

7. Device according to any of claims 1 - 6, **characterised in that** the separating layer (20, 32, 38, 46, 58, 94, 108) comprises at least one layer (40) that is hydrophobic.

8. Device according to any of claims 1 - 7, **characterised in that** the gas space (54) is larger than the liquid space (12).

9. Device according to any of claims 1 - 8, **characterised by** a pumping device (100) to generate circulation in the gas space (54).

## Revendications

1. Dispositif de préparation d'un échantillon liquide pour une injection directe de l'échantillon gazeux correspondant dans un micro-chromatographe en phase gazeuse, avec une chambre de liquide (12) et une chambre de gaz (16, 54, 104) qui sont séparées entre elles par une couche de séparation semi-perméable (20, 32, 38, 46, 58, 94, 108), dans lequel la chambre de liquide (12) comprend une conduite d'alimentation (14) pour l'échantillon liquide et dans lequel la chambre de gaz (16, 54, 104) comprend une sortie (18) qui peut être reliée avec le chromatographe en phase gazeuse (76), dans lequel, à la chambre de liquide (12) et/ou à la chambre de gaz (16, 54, 104), correspond au moins un élément chauffant (34, 35, 56, 106), **caractérisé en ce que** le dispositif est conçu pour prendre en charge environ 10 µl à 30 µl et **en ce que** la couche de séparation (20, 32, 38, 46, 58, 94, 108) présente une épaisseur de 10 µm à 300 µm et des pores (24) d'une taille entre 0,05 µm et 5 µm.

2. Dispositif selon la revendication 1, **caractérisé en ce que** la couche de séparation (20, 32, 38, 46, 58, 94, 108) est perméable de manière sélective sur au moins un côté (22, 48).

3. Dispositif selon l'une des revendications 1 à 2, **caractérisé en ce que** la couche de séparation (20, 32, 38, 46, 58, 94, 108) est une membrane.

4. Dispositif selon la revendication 3, **caractérisé en ce que** la membrane est constituée d'un des matériaux suivants, polytétrafluoroéthylène, polyfluorure de vinyle, polyester, polysulfone, dérivé de cellulose, polyamide, polyacrylate ou polypropylène.

5. Dispositif selon la revendication 3 ou 4, **caractérisé en ce que** la membrane est étirée.

6. Dispositif selon l'une des revendications 1 à 5, **caractérisé en ce que** la couche de séparation (20, 32, 38, 46, 58, 94, 108) comprend au moins deux couches (40, 42).

7. Dispositif selon l'une des revendications 1 à 6, **caractérisé en ce que** la couche de séparation (20, 32, 38, 46, 58, 94, 108) comprend au moins une couche (40) qui est hydrophobe.

8. Dispositif selon l'une des revendications 1 à 7, **caractérisé en ce que** la chambre de gaz (54) est plus grande que la chambre de liquide (12).

9. Dispositif selon l'une des revendications 1 à 8, **caractérisé par** un dispositif de pompage (100) pour la production d'une circulation dans la chambre de gaz (54).
